# EUROPÄISCHE PATENTSCHRIFT

(11) **EP 0 380 742 B1**
(45) Veröffentlichungstag und Bekanntmachung des Hinweises auf die Patenterteilung: **01.09.1993**
(21) Anmeldenummer: 89112520.5
(22) Anmeldetag: 08.07.1989
(51) Int. Cl.: B01D 53/34, G21F 7/02

(54) **Verfahren zum Beseitigen von Rückständen aus der Rauchgaswäsche durch Trocknen und Einengen und Vorrichtung zur Durchführung des Verfahrens**
Process for removing matter during flue gas scrubbing by drying and concentrating and apparatus for carrying out the process
Procédé d'élimination des déchets du lavage de gaz de fumée par séchage et concentration et installation pour réaliser le procédé

(30) Priorität: 06.12.1988 DE 3841009
(43) Veröffentlichungstag der Anmeldung: 08.08.1990
(73) Patentinhaber: KERNFORSCHUNGSZENTRUM KARLSRUHE GMBH, D-76050 Karlsruhe (DE)
(72) Erfinder: Dirks, Friedrich, D-7519 Gondelsheim (DE); Batsch, Ortwin, D-7514 Leopoldshafen (DE); Hempelmann, Wilhelm, D-7514 Leopoldshafen (DE); Leibold, Hans, D-7505 Ettlingen (DE)

(56) Entgegenhaltungen:
- EP-A- 0 159 760
- EP-A- 0 252 223
- DE-A- 2 716 329
- DE-A- 3 137 359
- GB-A- 2 146 261

## Beschreibung

Die vorliegende Erfindung betrifft ein Verfahren zum Beseitigen von Rückständen aus der Rauchgaswäsche bei der Naßreinigung von Rauchgasen gemäß dem Oberbegriff des Patentanspruchs 1 sowie eine zur Durchführung des Verfahrens geeignete Vorrichtung gemäß dem Oberbegriff des Patentanspruchs 3.

Beim Betreiben von Rauchgaswaschanlagen werden die im Rauchgas befindlichen Säuren und anderen Schadtoffe in der Waschflüssigkeit abgeschieden. Um die Funktionsfähigkeit bei der Waschflüssigkeit aufrecht zu erhalten bzw. um deren Abgabe an die Umwelt zu ermöglichen, wird die Waschflüssigkeit im allgemeinen durch Zugabe von Natronlauge oder Kalk neutralisiert. Dabei tritt eine Aufsalzung des Waschwassers bzw. der Waschflüssigkeit ein. Um nun Auskristallisationen in diesem Wasser zu verhindern, darf die Aufsalzung maximal 22 bis 25 % betragen. Die Beseitigung dieser Konzentrate ist problematisch, da sie wegen der enthaltenen Schadstoffe nur in beschränktem Umfang in dem normalen Abwasser zugegeben werden können. Umso mehr ist dies der Fall bei Anlagen in denen radioaktive Stoffe verbrannt worden könnnen. In solchen Anlagen sind die Konzentrate zwar in verfestigter Form endlagerfähig, der zusätzliche Anfall von Sekundärwaste ist aber beachtlich. Bekannte Trockenverfahren von Konzentraten haben das Ziel, das zu trocknenede Material möglichst zu pulverisieren. Andere Verfahren, wie z.B. Vakuumtrocknung oder trocknen mittels Infrarot oder Mikrowellen sind sehr Energieaufwendig und bedingen einen eigenen Verfahrensschritt. Dies ist insgesamt betrachtet der Nachteil aller bisherig angewendeten Verfahren für die Behandlung von Konzentraten aus Wascheinrichtungen von Verbrennungsanlagen oder Konzentraten aus ähnlichen Anlagen z.B. Verdampferanlagen.

Aus der EP-A-252 223 ist ein Verfahren bekannt, bei welchem eine Heißgasfilterstufe in Form von hängenden Filterkerzen, die von unten angeströmt werden, sowie eine oder mehrere Naßwaschstufen vorhanden sind. Bei diesem Verfahren werden die Waschflüssigkeit zum Trocknen in den Heißgasstrom eingeführt und die entstehenden festen Rückstände entfernt. Ein ähnliches Verfahren ist weiterhin aus der GB-A-2146261 bekannt, bei welchem das Waschkonzentrat in einen axtra Verdampfer vor einer Filterstufe in den Heißgasstrom eingeführt wird. Näheres über das Abscheiden der festen Bestandteile im Niederschlag ist nicht beschrieben.

Aufgabe der vorliegenden Erfindung ist es nun, ein Verfahren und eine zur Durchführung des Verfahrens geeignete Vorrichtung anzugeben, die di se Nachteile vermeidot und das Verdampfen des wäßrigen Anteils in Konzentraten sowie das Trocknen der Feststoffe auf vereinfachte Weise möglichst unter Zuhilfenahme der Wärme der Verbrennungsanlage selbst ermöglicht.

Zur Lösung dieser Aufgabe werden nun bei einem Verfahren der eingangs beschriebenen Art die Verfahrensschritte vorgeschlagen, die im Kennzeichen des Hauptanspruches von b) bis e) angegeben sind. Eine weitere, vorteilhafte Ausgestaltung des Verfahrens ist aus dem Kennzeichen f) des Anspruchs 2 zu entnehmen. Eine Vorrichtung zur Durchführung des Verfahrens gemäß dem Oberbegriff des Patentanspruches 3 löst die Aufgabe mittels der Merkmale g) bis i).

Mit der vorliegenden Erfindung wird nun ein einfaches Verfahren sowie eine sehr einfache Vorrichtung für dieses Verfahren geschaffen, das bei Vorhandensein eines Heißgasfilters der Verbrennungsanlage die Trocknung des Konzentrates ohne einen zusätzlichen Verfahrensschritt erlaubt. Die in den Heißgasfilter eindringende Düse ist sehr einfach herzustellen und der Energiebedarf beschränkt sich auf die Produktion der Druckluft zum Eindüsen und Rückblasen der Filterkerzen wie auf die elektrische Energie zum Fördern des Konzentrates. Im vorliegenden Fall ist das Ziel nicht die Herstellung eines möglichst leichten Pulvers, sondern die Trocknung des Konzentrates und das Einbringen der dabei entstandenen Salze in die Asche der Verbrennungsanlage bzw. in die Flugasche der Filter, so daß eine gemeinsame sehr einfache Paketierung dieser Abfallstoffe erfolgen kann. Bei vielen der bekannten Verfahren sind im Gegensatz zu der vorliegenden Erfindung gleichförmige Geschwindigkeiten, sowie eng begrenzte Temperaturgradienten notwendig. Bei dem erfindungsgemäßen Verfahren hingegen genügt ein Unterschreiten der Maximaltemperatur von 770° C. Die Anströmgeschwindigkeiten können dagegen ebenso wie der Temperaturbereich nach unten nahezu beliebig schwanken. Eine erfindungsgemäße Vorrichtung an einem Heißgasfilter, kann beinahe in jedem Verbrennungsofen oder in jedem Wärme erzeugenden Gerät, das entsprechende Temperaturen zur Folge hat eingebaut werden. Damit kann das erfindungsgemäße Verfahren auch bei anderen Prozessen als dem beschriebenen zur Anwendung kommen. Das entstehende Waschkonzentrat, das bisher in aufwendigen Verfahren entweder zementiert, bituminiert oder z.B. vakuumgetrocknet werden mußte, kann bei gleichzeitigem Betrieb einer Verbrennungsanlage dort getrocknet und in eine sehr gut endlagerfähige Form zusammen mit der Asche gebracht werden.

Weitere Einzelheiten der vorliegenden Erfindung werden im folgenden und anhand der Figuren näher erläutert.
- Die Figur 1: zeigt das Anlagenschema einer Verbrennungsanlage, in welcher das neue Verfahren ausgeübt wird und die
- Figur 2 den: Heißgasfilter der Anlage in vergrößerter Darstellung, die
- Figur 3 den: oberen Teil des Heizgasfilters mit der Rückblaseeinrichtung, die

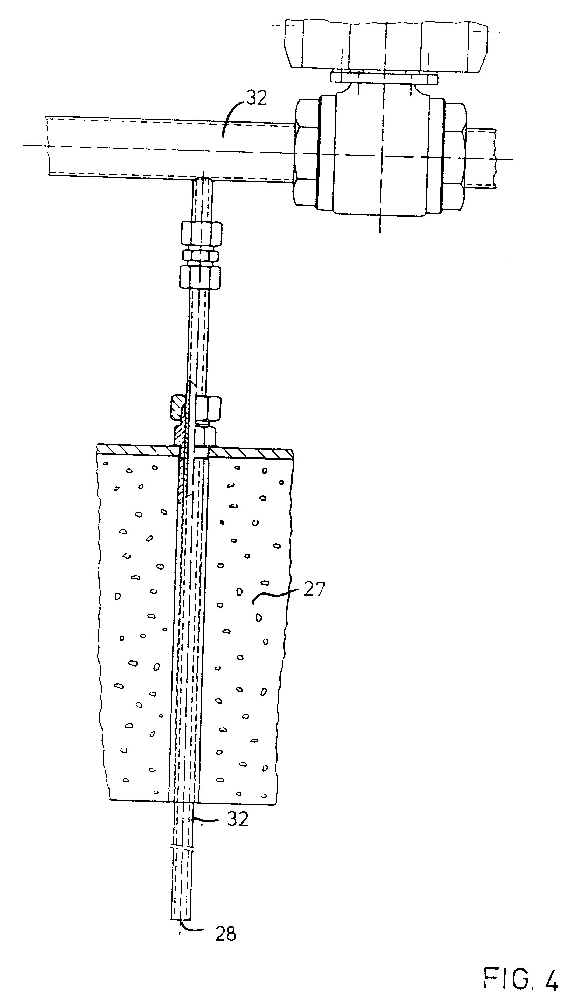

- Figur 4 eine: Rückblaselanze in vergrößerter Darstellung.

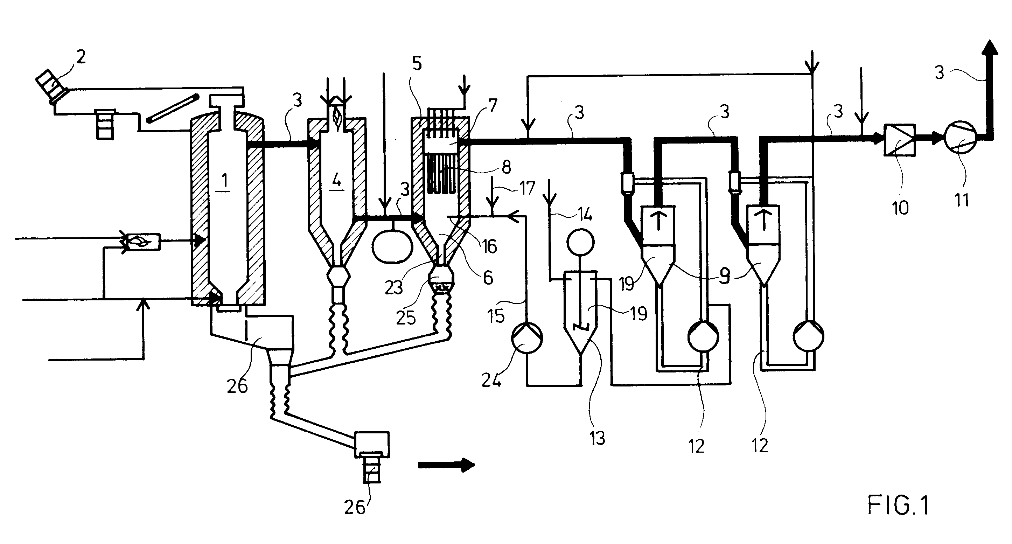

Die im Verbrennungsofen 1 bei der Verbrennung der Abfälle 2 entstehenden Rauchgase 2 werden in einem Nachbrenner 4 auf ca. 1200°C erhitzt und in die Anströmkammer 6 eines trockenen Heißgasfilters 5 geleitet (Figur 1). Von dort strömt das Rauchgas 3 von außen nach innen, durch die keramischen Filterkerzen 8, die in der, An- und Abströmkammer 6, 7 trennenden Halteplatte 30 in Halteöffnungen 31 gelagert sind und gelangt in die Abströmkammer 7, wird dabei gefiltert und von dort aus durch ein oder mehrere Waschstufen in Form von z.B. Strahlwäschern 9 geleitet. Die Temperatur beträgt dabei z.B. in einer ersten Heißgasfilterstufe ca. 800° C.

Hinter den Waschstufen 9 wird das Rauchgas 3 durch beigemischte Luft aufgeheizt, so daß seine Temperatur vor den Schwebstoffiltern 10 über den Taupunkt zu liegen kommt. Das Rauchgas 3 wird mit Hilfe des Gebläses 11 angesaugt und nach oben abgegeben.

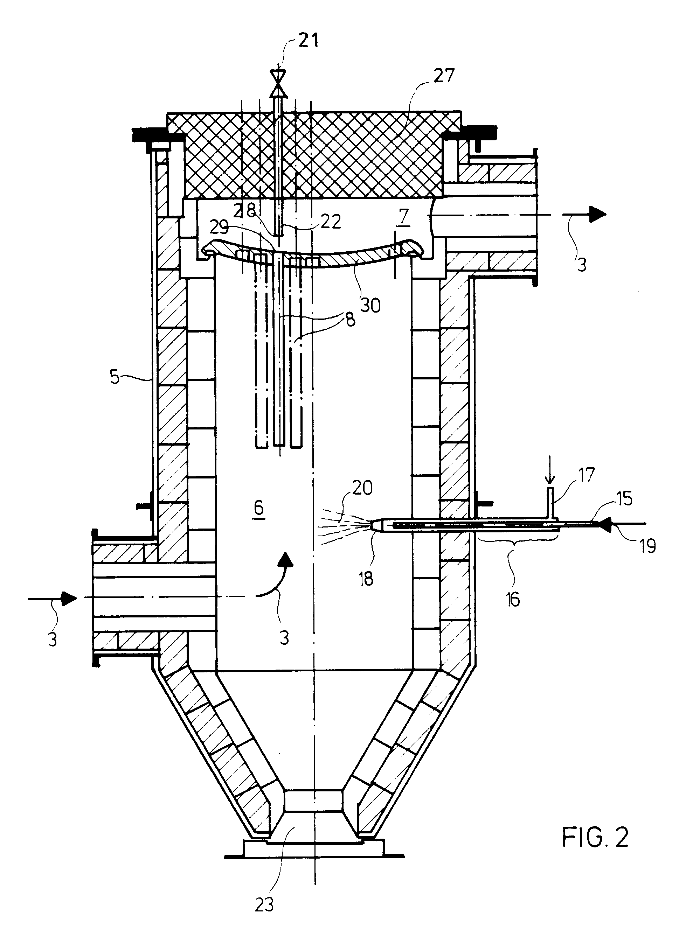

Die Waschflüssigkeit 19 der Wäsche 9 zirkuliert in der Leitung 12, wird nach einer bestimmten Zeit abgezogen, in der Mischeinrichtung 13 durch Zugabe von z.B. NaOH 14 neutralisiert und über die Einspritzleitung 15 dem lanzenförmig in die Anströmkammer 6 ragenden Doppelrohr 16 zugeführt (siehe Figur 2). Die Druckaufgabe erfolgt dabei durch Druckluft über die Leitung 17.

Am vorderen Ende des Doppelrohres 16 sitzt in der Anströmkammer 6 unterhalb der Filterkerzen 8 eine Zweistoffdüse 18, in welcher die über die Einspritzleitung 15 zugeführte Waschflüssigkeit 19 mittels der über die Leitung 17 zugeführte Druckluft zu dem Strahl 20 zerstäubt und eingesprüht wird. Das Wasser verdunstet dabei und die Salze lagern sich auf der Oberfläche der keramischen Filterkerzen 8 ab. Durch die Eindüsung mittels der Düse 18 entsteht nun eine Vergrößerung der Salzpartikel, so daß ein Verstopfen der Filterkerzen 8 verhindert wird. Von Zeit zu Zeit werden die auf den Filterkerzen 8 befindlichen Salzschichten mit Hilfe von Rückblaseeinrichtungen 21 entfernt und fallen in den Austragraum bzw. die Anströmkammer 6 des Filtergehäuses 5.

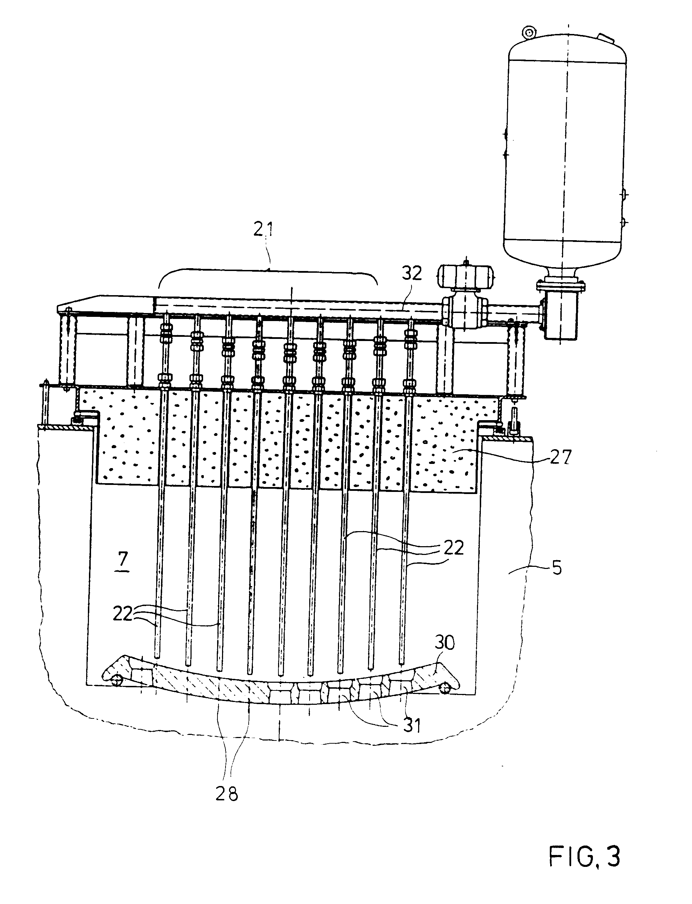

Die rückgeblasenen Salzreste besitzen dann die Form der Außenseite der keramischen Filterkerzen 8, d.h. sie sind schalenförmig. Die Rückblaseeinrichtung kann aus mehreren durch den Filterkammerdeckel 27 geführte Blaslanzen 22 bestehen (siehe Figur 3), von denen jeder Filterkerze 8 bzw. deren Halteöffnungen 31 eine zugeordnet ist und deren Blasöffnung 28 mit der jeweiligen Austrittsöffnung 29 der Kerzen 8 korrespondiert. Die Blaselanzen 22 werden über ein Sammelrohr 32 mit der Druckluft versorgt. Es ist jedoch auch möglich nur eine verfahrbare Lanze 22 vorzusehen.

### Bezugszeichenliste:

- 1: Verbrennungsofen
- 2: Abfälle
- 3: Rauchgase
- 4: Nachbrenner
- 5: Heißgasfilter
- 6: Anströmkammer
- 7: Abströmkammer
- 8: Filterkerzen
- 9: Wäscher
- 10: Filterstufen
- 11: Gebläse
- 12: Leitung
- 13: Mischeinrichtung
- 14: NaOh
- 15: Einspritzleitung
- 16: Doppelrohr
- 17: Druckluftleitung
- 18: Zweistoffdüse
- 19: Waschflüssigkeit bzw.-Konzentrat
- 20: Strahl
- 21: Rückblaseeinrichtung
- 22: Lanzen
- 23: Abblasöffnung
- 24: Dosierpumpe
- 25: Schredder
- 26: Asche
- 27: Filterkammerdeckel
- 28: Blasöffnung
- 29: Austrittsöffnung
- 30: Halteplatte
- 31: Halteöffnungen
- 32: Sammelrohr

## Patentansprüche

1. Verfahren zum Beseitigen von Rückständen aus der Rauchgaswäsche durch Trocknen und Einengen bei der Naßreinigung von Rauchgasen einer Verbrennungsanlage mit nachgeschaltetem Heißgasfilter mit von außen und unten angeströmten Filterkerzen und anschließenden Wäschern, vorzugsweise zur Anwendung bei Rauchgasen aus Verbrennungsanlagen für radioaktive Abfälle, deren Waschkonzentratrückstände einer Endlagerung in verfestigter Form zugeführt werden, bei welchem,
a) das Waschkonzentrat bzw. die Waschflüssigkeit vor der Filterstufe in das zu reinigende Rauchgas zurückgeführt wird,
**dadurch gekennzeichnet,** daß
b) das Waschkonzentrat bzw. die Waschflüssigkeit (19) direkt in die Anströmkammer (6) der Heißgasfilter (5) unter den Filterkerzen (8) eingesprüht wird und
c) die im Waschkonzentrat (19) enthaltenen Salze außen auf der Anströmseite (6) der heißen Filterkerzen (8) unter Verdunstung des Wasseranteils abgeschieden werden, und
d) die außen auf der Oberfläche der Filterelemente (8) schichtförmig abgeschiedenen Salze durch Rückblasen von Luft von oben her in die Filterkerzen (8) von deren Anströmseite abgelöst werden und
e) danach in den unteren Teil der Anströmkammer (6) fallen und von dort abgezogen sowie anschließend zerkleinert werden.

2. Verfahren nach Anspruch 1, **dadurch gekennzeichnet**, daß
f) die zerkleinerten Salzteile direkt mit der Asche (26) zusammengeführt und anschließend mit dieser zusammenpaketiert werden.

3. Vorrichtung zur Durchfürung der Verfahrensschritte b) bis d) eines Verfahrens nach den Ansprüchen 1 oder 2, in einer Verbrennungsanlage mit nachgeschaltetem Heißgasfilter, bestehend aus einem Gehäuse mit An- und Abströmkammer, sowie dazwischengelegenen, in einer Halteplatte aufgehängten, senkrecht stehenden und von außen und unten angeströmten Heigasfilterkerzen, **gekennzeichnet durch** die folgenden Merkmale:
g) unterhalb der Filterkerzen (8) ragt von außerhalb eine Zweistoffsprühdüse (18) mit ihrer Mündung in die Anströmkammer (6)
h) die Zweistoffsprühdüse (18) ist als Injektor ausgebildet mit Druckluft als Treibmittel und Salzkonzentrat als zu förderndes bzw. einzusprühendes Medium,
i) oberhalb der die An- und Abströmkammer (6, 7) trennenden Halteplatte (30) ist über jeder Austrittöffnung (29) der Filterkerzen (8) eine mit Druckluft beaufschlagbare Rückblaselanze (22) angeordnet, deren Blasöffnung (28) mit der Austrittsöffnung (29) korrespondiert.

## Claims

1. Method of eliminating residues from the flue gas wash by drying and concentrating processes for the wet-purification of flue gases of a combustion system having a hot-gas filter, which is connected downstream thereof and is provided with filter cartridges, which have streams flowing thereto from externally and downwardly, and subsequent washers, preferably for use with flue gases from combustion systems for radioactive waste materials having residues of washing concentrate which pass to final storage in a solidified form, wherein
a) the washing concentrate or respectively the washing fluid is returned to the flue gas to be purified upstream of the filter stage,
characterised in that
b) the washing concentrate or respectively the washing fluid (19) is sprayed directly into the inflow chamber (6) of the hot-gas filter (5) beneath the filter cartridges (8), and
c) the salts contained in the washing concentrate (19) are precipitated externally on the inflow side (6) of the hot filter cartridges (8) so as to evaporate the water content, and
d) the salts, which are precipitated externally in layers on the surface of the filter elements (8), are separated from the inflow side of the filter cartridges (8) as a result of air being blown back from the top into said cartridges, and
e) they then fall into the lower portion of the inflow chamber (6) and are removed from there and are subsequently comminuted.

2. Method according to claim 1, characterised in that
f) the comminuted salt particles are brought together directly with the ash (26) and are subsequently packed together therewith.

3. Device for implementing the method steps b) to d) of a method according to claims 1 or 2, in a combustion system having a hot-gas filter connected downstream thereof, said device comprising a housing, having an inflow chamber and an outflow chamber as well as vertical hot-gas filter cartridges interposed between said chambers, which cartridges are mounted in a retaining plate and have streams flowing from externally and downwardly, characterised by the following features:
g) a two-substance spray nozzle (18) extends with its mouth from externally beneath the filter cartridges (8) into the inflow chamber (6);
h) the two-substance spray nozzle (18) is in the form of an injector, with compressed air as the propellant and with salt concentrate as the medium to be conveyed or injected;
i) a blow-back lance (22), which is actuatable by compressed air, is disposed above each outlet aperture (29) in the filter cartridges (8) above the retaining plate (30), which separates the inflow and outflow chamber (6, 7), the blast aperture (28) of said lance corresponding to the outlet aperture (29).

## Revendications

1. Procédé pour éliminer les résidus de lavage du gaz de fumée par séchage et concentration lors de la purification par voie humide des gaz de fumée d'une installation de combustion avec des filtres de gaz très chauds, des filtres à bougies soumis à un flux soufflé de l'extérieur et en dessous et à des lavages faisant suite, de préférence à utiliser pour des gaz de fumée d'installation de combustion pour déchets radioactifs, dont les résidus de concentré de lavage sont amenés à un dépôt définitif sous forme compactée, procédé dans lequel,
a) Le concentré de lavage ou le liquide de lavage est ramené avant l'étape de filtrage dans le gaz de fumée à purifier,
caractérisé en ce que,
b) Le concentré de lavage ou le liquide de lavage (19) est pulvérisé directement dans la chambre de soufflage (6) des filtres de gaz très chauds (5) en dessous des filtres à bougies (8) et,
c) Les sels contenus dans le concentré de lavage sont séparés à l'extérieur du côté du soufflage (6) des filtres à bougies (8) très chauds par séparation de la quantité d'eau et,
d) Les sels déposés sous forme de couche à l'extérieur sur la surface des éléments filtrants (8) sont détachés par soufflage d'air en retour à partir du haut dans les filtres à bougies (8) du côté du soufflage et,
e) Par suite, ils tombent dans la partie inférieure de la chambre de soufflage (6) et de là sont retirés et broyés à la suite.

2. Procédé selon la revendication 1, caractérisé en ce que,
f) Les parties de sels broyées sont réunies à la cendre (26) et ensuite sont empaquetées avec celle-ci.

3. Dispositif de réalisation des phases b) à d) d'un procédé selon les revendications 1 ou 2, dans une installation de combustion avec des filtres à gaz très chauds branchés à la suite, dispositif se composant d'un carter avec chambre de soufflage et chambre d'évacuation du flux, ainsi que des filtres à bougies pour gaz très chauds, disposés entre les deux, suspendus à une plaque de soutien, verticaux et alimentés par soufflage de l'extérieur et en dessous, caractérisés par les critères suivants :
g) En dessous des filtres à bougies (8) dépasse de l'extérieur un pulvérisateur binaire (18) avec son orifice dans la chambre de soufflage (6),
h) Le pulvérisateur binaire (18) est un injecteur avec de l'air comprimé comme agent moteur et du concentré salin comme milieu à transporter et à pulvériser.
i) Au-dessus de la plaque de soutien (30) séparant les chambres de soufflage et d'évacuation du flux (6, 7), est placés au-dessus de chaque ouverture de sortie (29) des filtres à bougies (8) une lance de soufflage en retour (22) pouvant être soumise à de l'air comprimé (22) et dont l'orifice de soufflage (28) correspond à l'ouverture de sortie (29).
